# EUROPÄISCHE PATENTSCHRIFT

(11) **EP 1 331 533 B1**
(45) Veröffentlichungstag und Bekanntmachung des Hinweises auf die Patenterteilung: **04.07.2018**
(21) Anmeldenummer: 03000219.0
(22) Anmeldetag: 07.01.2003
(51) Int. Cl.: H04L 29/12, H05B 37/02, G05B 19/042

(54) **Verfahren zum Zuordnen von Betriebsadressen in einem Steuersystem für eine Vielzahl von Aktoren**
Process of allocating user addresses in a control system for a plurality of actuators
Procédé d'allocation d'addresses de fonctionnement dans un système de commande avec une pluralité d'actionneurs

(30) Priorität: 24.01.2002 DE 10202714
(43) Veröffentlichungstag der Anmeldung: 30.07.2003
(73) Patentinhaber: Zumtobel Lighting GmbH, 6850 Dornbirn (AT)
(72) Erfinder: Markstaler, Markus, 6545 Hohenems (AT); Damm, Michael, 6800 Feldirch (AT)
(74) Vertreter: Kistner, Thomas Alexander

(56) Entgegenhaltungen:
- EP-A- 0 433 527
- EP-A- 0 434 986
- WO-A-00/43883
- DE-A- 4 121 152
- DE-U- 29 806 094
- US-A- 4 918 690

## Beschreibung

Die vorliegende Erfindung betrifft ein Verfahren, mit dem jeden aus einer Vielzahl von Aktoren, die über ein Bussystem mit einem zentralen Befehlsgeber verbunden sind, eine Betriebsadresse zugeordnet wird.

In größeren Gebäuden kommen oftmals Beleuchtungssysteme zum Einsatz, die eine Vielzahl von verteilt angeordneten Leuchten aufweisen, welche über ein gemeinsames Bussystem mit einer zentralen Steuereinheit verbunden sind. Dies eröffnet beispielsweise die Möglichkeit, die Beleuchtung eines gesamten Gebäudekomplexes automatisch an den Tagesablauf anzupassen oder die Helligkeit einzelner Leuchten ferngesteuert zu verändern. Neben Leuchtenmodulen können allerdings auch andere Geräte der Hausleittechnik an das Bussystem angeschlossen werden, wie z.B. Klimageräte, Jalousiesteuerungen oder Sensoren jeglicher Art. Auch bei diesen weiteren Geräten wird durch den Anschluss an das Bussystem der Komfort bei der Bedienung erhöht. Allgemein werden solche an ein Bussystem der Gebäudeleittechnik anschließbaren Geräte auch als Aktoren bezeichnet.

Um die verschiedenen Aktoren eines Steuersystems einzeln ansteuern zu können, müssen diese eine individuelle Adresse aufweisen, über die sie von dem zentralen Befehlsgeber jeweils einzeln angesprochen werden können. Bei dieser individuellen Adresse kann es sich beispielsweise um eine Produktionsnummer handeln, die den Aktoren bei deren Herstellung zugewiesen wird. Oftmals ist es allerdings auch erwünscht, mehrere Aktoren gemeinsam anzusprechen. Dies ist zum Beispiel dann der Fall, wenn sämtliche in einem Raum befindlichen Leuchten auf einen bestimmten Helligkeitswert eingestellt oder die Jalousien einer Fensterfront in eine bestimmte Stellung gebracht werden sollen. Zwar kann auch dieses gruppenweise Ansteuern über die Ursprungsadressen der Aktoren erfolgen, vorteilhaft wäre allerdings, wenn die Adressen bereits die Anordnung oder Gruppierung der einzelnen Aktoren berücksichtigen würden.

Es ist daher üblich, den einzelnen Aktoren bei der Installation des Steuersystems oder beim Hinzufügen eines neuen Aktors zu dem System eine sogenannte Betriebsadresse zuzuweisen, welche die Anordnung und/oder Gruppierung des Aktors bereits berücksichtigt. Um eine bestimmte Gruppe der Aktoren gemeinsam anzusteuern, muss dann nicht mehr jeder einzelne Aktor dieser Gruppe unter seiner persönlichen Ursprungsadresse kontaktiert werden. Vielmehr ist es ausreichend, einen Befehl auf das Bussystem zu geben, der an die entsprechende Gruppe gerichtet ist und von sämtlichen Aktoren dieser Gruppe automatisch ausgeführt wird. Diese Betriebsadresse kann sogar eine gestaffelte Klassifizierung beinhalten, die es dem Befehlsgeber erlaubt, jeweilige Gruppen und Untergruppen von Aktoren anzusprechen. Darüber hinaus sind derartige Betriebsadressen oftmals erheblich kompakter und kürzer als die in der Regel sehr komplexen Ursprungsadressen, wodurch der Datentransfer über das Bussystem erleichtert und erhöht wird.

Die Verwendung solcher vorstehend beschriebener Betriebsadressen wird beispielsweise in der europäischen Offenlegungsschrift EP 0 433 527 A1 beschrieben. Das Zuordnen der Betriebsadressen zu den verschiedenen Aktoren erfolgt hier nach einem bestimmten Verfahren, das nachfolgend kurz erläutert werden soll. Dabei besitzen alle Aktoren eine während der Produktion vergebene individuelle Ursprungsadresse, über die sie von der zentralen Steuereinheit ansprechbar sind. Zu Beginn des Verfahrens übermittelt die zentrale Steuereinheit an alle Aktoren bzw. an diejenigen Aktoren, die noch keine Betriebsadresse besitzen, die Aufforderung, ihre jeweiligen Ursprungsadressen zu senden. Die physikalischen Gegebenheiten in dem Bussystem haben zur Folge, dass eine der von den Aktoren übermittelten Ursprungsadressen zuerst von der zentralen Steuereinheit empfangen und dort zwischengespeichert wird. Nach dem Empfang dieser Ursprungsadresse sendet die zentrale Steuereinheit den Befehl, dass sich der Aktor mit dieser entsprechenden Ursprungsadresse identifizieren soll. Handelt es sich bei dem Aktor um eine Leuchte, so kann dieses Identifizierungssignal beispielsweise darin bestehen, dass die Leuchte einen bestimmten Helligkeitswert annimmt oder ihre Helligkeit kontinuierlich moduliert. Handelt es sich bei dem entsprechenden Aktor beispielsweise um ein Klimagerät oder eine Jalousiesteuerung, so kann das Identifizierungssignal auch aus einem akustischen Signal oder dem Aufleuchten oder Blinken einer an dem Gerät angeordneten Signallampe bestehen.

Sinn dieses Identifizierungssignals ist es, den Standort des Aktors festzustellen und dementsprechend eine geeignete Betriebsadresse zu wählen, die den ermittelten Standort berücksichtigt. Diese gewünschte Betriebsadresse kann nun an der zentralen Steuereinheit eingegeben werden, die eine entsprechende Information an den Aktor übermittelt, so dass dieser diese Betriebsadresse in einem in dem Aktor vorgesehenen Speicher ablegt. Beim späteren Betrieb des Gesamtssystems kann der Aktor dann unter dieser Betriebsadresse gruppenweise aber auch individuell angesteuert werden. Diese Schritte werden solange wiederholt, bis sämtlichen Aktoren des Steuersystems eine geeignete Betriebsadresse zugewiesen wurde.

Das soeben beschriebene Verfahren ist bei sehr großen Steuersystemen insofern unbefriedigend, als dass sich die zentrale Steuereinheit und damit das Eingabegerät unter Umständen sehr weit weg von den das Identifizierungssignal abgebenden Aktoren befindet. Bei Steuersystemen, die sich beispielsweise über mehrere Stockwerke erstrecken, müssen von dem Benutzer weite Strecken zurückgelegt werden, um festzustellen, welcher Aktor sich gerade identifiziert. Dies wird zusätzlich dadurch erschwert, dass es im Grunde rein zufällig ist, welche der von den Aktoren übermittelten Ursprungsadressen zunächst bei der zentralen Steuereinheit eintrifft, so dass keine zuverlässigen Voraussagen getroffen werden können, wo der sich als nächstes identifizierende Aktor befindet.

Der vorliegenden Erfindung liegt deshalb die Aufgabe zugrunde, das aus der EP 0 433 527 A1 bekannte und vorstehend beschriebene Verfahren zum Zuordnen von Betriebsadressen für die Aktoren eines Steuersystems derart zu vereinfachen, dass das Auffinden des das Identifizierungssignal abgebenden Aktors vereinfacht wird.

Diese Aufgabe wird durch ein Verfahren gemäß dem Anspruch 1 bzw. Anspruch 2 gelöst. Dabei werden erfindungsgemäß das Bussystem in mehrere Bereiche unterteilt und lediglich die in jeweils einem ausgewählten Bereich befindlichen Aktoren zur Abgabe des Identifizierungssignals aufgefordert. Im Gegensatz zu dem aus der EP 0 433 527 A1 bekannten Verfahren, bei dem sich der als nächstes identifizierende Aktor an jeder beliebigen Stelle des Systems befinden kann, wird somit erfindungsgemäß der Standort des sich identifizierenden Aktors auf einen bestimmten ausgewählten Bereich des Bussystems eingeschränkt und damit das Auffinden des gesuchten Aktors deutlich erleichtert. Es kann dann zunächst allen Aktoren des ausgewählten Bereichs auf einfache und schnelle Weise eine Betriebsadresse zugewiesen werden und dann in einen weiteren Bereich des Bussystems gewechselt werden, in dem erneut das Zuweisen der Betriebsadressen durchgeführt wird.

Die Aufteilung eines Bussystems in mehrere Bereiche ist bereits aus der WO 99/48251 A1 bekannt. Hier erfolgt allerdings die Aufteilung nicht zum Vereinfachen der Inbetriebnahme des Systems und der Zuweisung der Betriebsadressen, sondern zum Überprüfen der Funktionsfähigkeit einzelner Bereiche des Bussystems.

In Anspruch 1 ist dann als erste Variante vorgesehen, dass derjenige Bereich des Bussystems, dessen Aktoren im Zuge der Zuordnung von Betriebsadressen zur Abgabe des Identifizierungssignals aufgefordert werden sollen, manuell ausgewählt wird. Dies kann beispielsweise mit Hilfe von sogenannten Unterverteilern des Bussystems erfolgen, die jeweils einen Bereich des Bussystems mit dem zentralen Befehlsgeber verbinden und dazu ausgebildet sind, während dem Zuordnen der Betriebsadressen die Aufforderung zum Abgeben des Identifizierungssignals an die Aktoren, die sich nicht in dem ausgewählten Bereich befinden, zu unterdrücken.

Anstelle dieser manuellen Auswahl ist in Anspruch 2 dann als zweite Variante vorgesehen, dass in einem ersten Schritt der zentrale Befehlsgeber zunächst einen beliebigen Aktor des gesamten Steuersystems zur Abgabe eines Identifizierungssignals auffordert. Für den Fall, dass sich der das Identifizierungssignal abgebende Aktor nicht in einem gewünschten Bereich befindet, ruft der zentrale Befehlsgeber dann ohne Zuweisung einer Betriebsadresse einen weiteren Aktor zur Abgabe des Identifizierungssignals auf. Diese erneute Aufforderung wird allerdings an diejenigen Aktoren des Bereichs, in dem sich der das vorherige Identifizierungssignal abgebende Aktor befindet, nicht übermittelt, da sich diese Aktoren offensichtlich nicht in dem gewünschten Bereich, der ausgewählt werden soll, befinden.

Die Aufforderung zum Abgeben des Identifizierungssignals wird dann so lange wiederholt, bis sich schließlich ein Aktor in dem gewünschten Bereich identifiziert. Diesem Aktor wird dann eine Betriebsadresse zugewiesen, wobei anschließend alle weiteren Aufforderungen zum Abgeben eines Identifizierungssignals an die Aktoren des selben - nun ausgewählten - Bereichs übermittelt wird. Erst nachdem allen Aktoren des ausgewählten Bereichs eine Betriebsadresse zugewiesen wurde, wird das Verfahren mit einem neu auszuwählenden Bereich fortgeführt.

Weiterbildungen der Erfindung sind Gegenstand der Unteransprüche. So sollte in beiden vorstehend beschriebenen Varianten jeweils nur ein einziger Aktor das Identifizierungssignal abgeben, weshalb es bspw. erforderlich ist, dass der zentrale Befehlsgeber die Aktoren auch nur einzeln zur Abgabe dieses Signals auffordert. Die Aktoren müssen daher bereits vor dem Zuordnen einer Betriebsadresse von dem zentralen Befehlsgeber individuell ansprechbar sein. Analog zu dem Verfahren der EP 0 433 527 A1 kann deshalb vorgesehen sein, dass vor einer Aufforderung zum Abgeben des Identifizierungssignals der zentrale Befehlsgeber die Aktoren zur Übermittlung einer Ursprungsadresse aufruft und dann denjenigen Aktor zur Abgabe des Identifizierungssignals auffordert, dessen Ursprungsadresse zuerst von dem zentralen Befehlsgeber empfangen wurde. Um gemäß der vorliegenden Erfindung die Aktoren, die das Identifizierungssignal abgeben sollen, auf einen ausgewählten Bereich des Bussystems zu beschränken, kann vorgesehen sein, dass auch lediglich nur die in dem ausgewählten Bereich befindlichen Aktoren zur Übermittlung ihrer Ursprungsadresse aufgefordert werden. Alternativ dazu kann allerdings auch vorgesehen sein, dass alle an das Bussystem angeschlossenen Aktoren zur Übermittlung ihrer Ursprungsadressen aufgefordert werden, wobei jedoch die Übermittlung der Ursprungsadressen der in den anderen Bereichen angeordneten Aktoren zurück zu dem zentralen Befehlsgeber unterdrückt oder zumindest zeitlich verzögert wird. Ferner kann vorteilhaft vorgesehen sein, dass lediglich solche Aktoren ihre Ursprungsadresse übermitteln, denen noch keine Betriebsadresse zugewiesen wurde.

Eine weitere Möglichkeit, die Aktoren individuell anzusprechen und zur Abgabe des Identifizierunssignals aufzufordern, ist in der WO 95/14972 A1 beschrieben. Hierbei fordert der zentrale Befehlsgeber die einzelnen Aktoren nicht zur Übermittlung einer Ursprungsadresse auf. Statt dessen erzeugt der zentrale Befehlsgeber sogenannte Suchadressen und übermittelt diese gleichzeitig an sämtliche Aktoren. Die Aktoren vergleichen dann ihre Ursprungsadressen mit der Suchadresse und geben eine Rückmeldung, ob ihre jeweilige Ursprungsadresse ober- oder unterhalb der Suchadresse liegt. Auf Grundlage dieser Rückmeldungen stellt der zentrale Befehlsgeber fest, ob es keinen, einen oder sogar mehrere Aktoren mit einer Ursprungsadresse unterhalb oder oberhalb der Suchadresse gibt.

Die von dem zentralen Befehlsgeber übermittelten Suchadressen werden entsprechend einem Algorithmus solange verändert und die Antworten der Aktoren ausgewertet, bis von dem zentralen Befehlsgeber eine der Anzahl der Aktoren entsprechende Anzahl von Adressbereichen bestimmt wurde, wobei die Ursprungsadresse jedes Aktors in jeweils einem dieser Adressbereiche liegt. Bevor die Aktoren individuell zur Abgabe des Identifizierungssignals aufgefordert werden, wird bei diesen Verfahren somit eine Liste erstellt, die Auskunft darüber gibt, wie viele Aktoren an das gesamte Bussystem angeschlossen sind und in welchen Adressbereichen jeweils die einzelnen Ursprungsadressen liegen. Bei diesen Ursprungsadressen kann es sich insbesondere um Adressen handeln, die von den einzelnen Aktoren zu Beginn der Inbetriebnahme des Systems mit Hilfe eines Zufallsgenerators erzeugt werden. Zur Abgabe des Identifizierungssignals wird dann entweder der Aktor mit der höchsten oder niedrigsten Ursprungsadresse aufgefordert und nach dem Zuweisen einer Betriebsadresse mit dem Aktor mit der nächsthöheren bzw. nächstniedrigeren Ursprungsadresse in gleicher Weise verfahren.

Dieses aus der WO 95/14972 A1 bekannte Verfahren kann gemäß der vorliegenden Erfindung ebenfalls auf einzelne Bereiche des Bussystems beschränkt werden, indem der zentrale Befehlsgeber bei der Ermittlung des Aktors mit der höchsten oder niedrigsten Ursprungsadresse bzw. bei der Ermittlung der zu den Aktoren gehörenden Adressbereichen lediglich die Aktoren in einem ausgewählten Bereich des Bussystems berücksichtigt und dementsprechend auch nur diese Aktoren später zur Abgabe eines Identifizierungssignals auffordert. Auch hier kann vorgesehen sein, dass lediglich solche Aktoren in das Verfahren einbezogen werden, denen noch keine Betriebsadresse zugewiesen wurde.

Zur weiteren Beschleunigung des erfindungsgemäßen Verfahrens kann vorgesehen sein, dass zumindest ein Teil oder sogar alle der zuletzt von dem zentralen Befehlsgeber empfangenen Ursprungsadressen gespeichert werden. Bei der späteren Aufforderung zur Abgabe des Identifizierungssignals muss dann nicht immer zuerst eine neue Ursprungsadresse übermittelt oder der Aktor mit der höchsten oder niedrigsten Ursprungsadresse bestimmt werden. Statt dessen können die in dem zentralen Befehlsgeber gespeicherten Informationen auf schnelle Weise abgerufen werden, wodurch der Adressiervorgang beschleunigt wird. Ferner kann zur Erhöhung des Bedienkomforts vorgesehen sein, dass ein Teil der Ursprungsadressen gerätespezifische Informationen erhält, welche den Typ des jeweiligen Aktors kennzeichnen. Somit kann auf einfache Weise festgestellt werden, um was für eine Art von Aktor es sich handelt, der als nächstes das Identifizierungssignal abgibt.

Die vorliegende Erfindung betrifft auch ein Steuersystem zur Durchführung des erfindungsgemäßen Verfahrens, welches einen zentralen Befehlsgeber, mehrere in verschiedenen Bereichen angeordnete Aktoren sowie ein Bussystem aufweist, das den zentralen Befehlsgeber mit den Aktoren verbindet. Das erfindungsgemäße Steuersystem zeichnet sich durch mehrere Unterverteiler aus, die jeweils einen Bereich des Bussystems mit dem zentralen Befehlsgeber verbinden und wie vorstehend beschrieben dazu ausgebildet sind, während dem Zuordnen der Betriebsadressen die Aufforderung an die Aktoren zum Abgeben des Identifizierungssignals, die sich nicht in einem ausgewählten Bereich befinden, zu unterdrücken.

Die Verwendung dieser Unterverteiler ist insbesondere dann von Vorteil, wenn unterschiedliche Bussysteme zusammenarbeiten. So kann beispielsweise vorgesehen sein, dass das Bussystem zwischen dem zentralen Befehlsgeber und den Unterverteilern anders ausgebildet ist als die Bussysteme zwischen den Unterverteilern und den einzelnen Aktoren. Die Unterverteiler dienen in diesem Fall gleichzeitig auch als Umsetzer für die Übertragung von einem Bussystem auf das andere.

Nachfolgend soll die Erfindung anhand der beiliegenden Zeichnung näher erläutert werden. Es zeigen:
Fig. 1 ein erfindungsgemäßes Steuersystem mit einem zentralen Befehlsgeber sowie einem in mehrere Bereiche aufgeteilten Bussystem; und
Fig. 2 ein Flussdiagramm der Vorgehensweise bei der Auswahl eines Bereichs gemäß dem erfindungsgemäßen Verfahren.

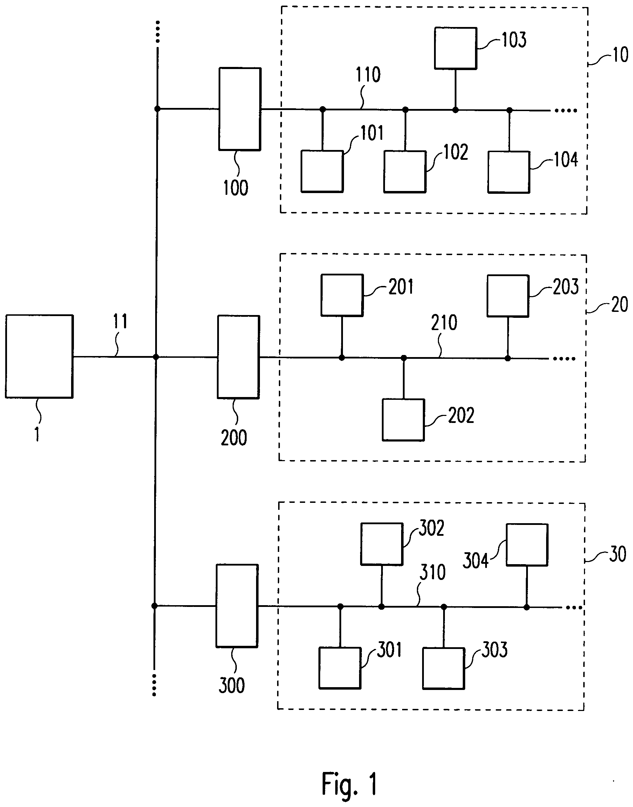

Fig. 1 zeigt ein Blockschaltbild eines Steuersystems mit einem zentralen Befehlsgeber 1, der über eine erste Busleitung 11 mit mehreren Unterverteilern 100, 200, 300 verbunden ist. Jeder Unterverteiler 100, 200, 300 ist einem Busbereich 10, 20, 30 mit unterschiedlichen Aktoren 101-104, 201-203 und 301-304 und eigenen Busleitungen 110, 210 bzw. 310 zugeordnet. Die einzelnen Bereiche 10, 20, 30 des Bussystems können beispielsweise einzelnen Räumen oder Bereichen des Gebäudes entsprechen und sind vorzugsweise zusammengefasst, dass die Aktoren 101-104, 201-203 und 301-304 eines einzelnen Bereichs 10, 20, 30 gut und einfach für einen Benutzer überschaubar sind.

Bei den Busleitungen 11, 110, 210, 310 handelt es sich vorzugsweise um ein konventionelles Bussystem, d.h. um ein Bussystem mit einer eigenen Zweidraht-Leitung neben der (hier nicht dargestellten) Netzversorgung für den Befehlsgeber 1, die Unterverteiler 100, 200, 300 und die Aktoren 101-104, 201-203 und 301-304. Es besteht allerdings auch die Möglichkeit, zumindest einen Teil des Bussystems mit identischen Versorgungs- und Steuerleitungen auszubilden, wobei die Steuersignale hochfrequent, z.B. in PCM- oder FM-Technik über die niederfrequente (50 Hertz) Netzversorgungsleitung geführt werden. Insbesondere kann das Busleitungssystem 11 zwischen dem zentralen Befehlsgeber 1 und den Unterverteilern 100, 200, 300 unterschiedlich zu den Bussystemen der einzelnen Bereiche 10, 20, 30 ausgeführt sein. Die Unterverteiler 100, 200, 300 dienen dann gleichzeitig als Umsetzer für die Datenübertragung von einem Bussystem auf das andere.

Bei den an das gesamte Steuersystem angeschlossenen Aktoren kann es sich um die verschiedensten Geräte der Gebäudeleittechnik handeln, insbesondere um Leuchten, Klimageräte oder Jalousiesteuerungen. Allen Aktoren ist ein Speicher gemeinsam, in den eine den Aktoren zugewiesene Betriebsadresse gespeichert werden kann. Diese Betriebsadresse berücksichtigt vorzugsweise die Lage des und ermöglicht somit auf einfache Weise eine gruppenweise Ansteuerung mehrerer in einem bestimmten Raum oder Bereich gemeinsam angeordneter oder eine gemeinsame Funktion erfüllender Aktoren. Wie in der EP 0 433 527 A1 ausführlich beschrieben, kann die Betriebsadresse beispielsweise eine Kombination aus Raumnummer, Gruppennummer und Einzelverbrauchernummer darstellen.

Darüber hinaus ist erforderlich, dass die einzelnen bereits vor dem Zuweisen einer Betriebsadresse individuell von dem zentralen Befehlsgeber 1 ansprechbar sind, um beispielsweise zum Abgeben des Identifizierungssignals aufgefordert werden zu können. Die Aktoren weisen daher zusätzlich auch eine sogenannte Ursprungsadresse auf, durch die sie von allen anderen Aktoren unterscheidbar sind. Bei dieser Ursprungsadresse handelt es sich beispielsweise um eine Produktionsnummer, die den Aktoren während der Herstellung zugewiesen und in einen Speicher eingeschrieben wird. Bei diesem Speicher kann es sich sowohl um einen separaten und nicht-beschreibbaren Speicher als auch um einen wiederbeschreibbaren Speicher handeln. Bei der zweiten Variante kann vorgesehen sein, dass nach dem Zuweisen einer Betriebsadresse die Ursprungsadresse des Aktors durch die neue Betriebsadresse überschrieben wird.

Anstelle einer fest vorgegebenen Ursprungsadresse kann allerdings auch vorgesehen sein, dass die Aktoren bei der Inbetriebnahme des Systems eine neue Zufallsadresse generieren. Analog zu der WO 95/14972 A1 weisen die Aktoren dann jeweils einen Zufallsgenerator zum Erzeugen einer derartigen Zufallsadresse auf. Auch bei dieser Variante kann durch eine entsprechende Gestaltung des Zufallsgenerators weitestgehend sichergestellt werden, dass die neugenerierte Ursprungsadresse jeweils nur einmal in dem gesamten System auftritt. Ferner kann vorgesehen sein, dass nur ein Teil der Ursprungsadresse neu generiert wird, während ein weiterer Teil der Ursprungsadresse unverändert bleibt und Informationen über den jeweiligen Gerätetyp des Aktors enthält. Hierdurch ist der zentrale Befehlsgeber 1 in der Lage, zu erkennen, was für eine Art von Aktor zur Abgabe des Identifizierungssignals aufgefordert wird. Auch bei der oben beschriebenen Variante mit einer fest vorgegebenen Ursprungsadresse kann vorgesehen sein, dass diese Informationen über den Gerätetyp enthält.

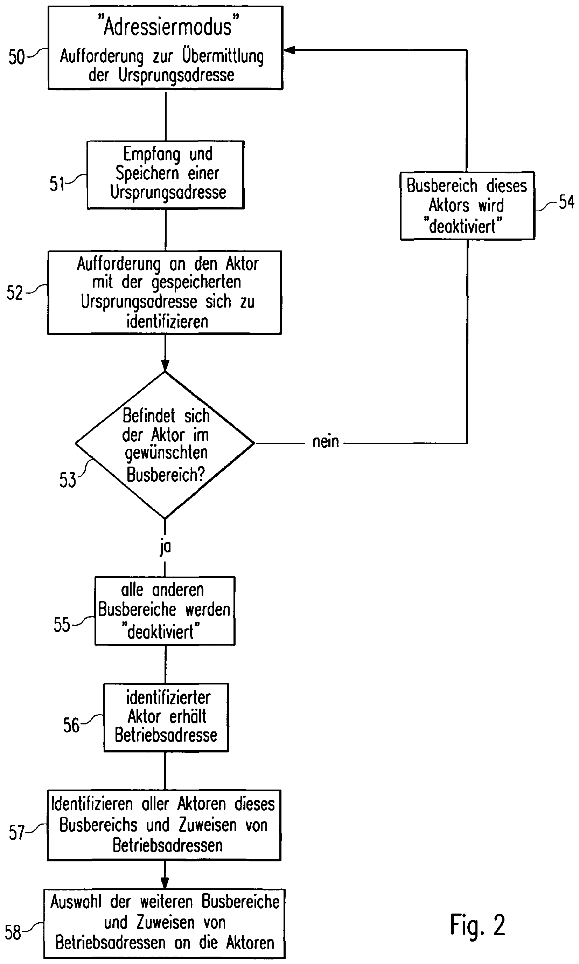

Nachfolgen soll anhand von Fig. 2 ein bevorzugtes Ausführungsbeispiel des erfindungsgemäßen Verfahrens zum Zuordnen von Betriebsadressen erläutert werden. Dabei wird zunächst ein erster sog. gewünschter Bereich des Bussystems ausgewählt, dessen Aktoren als erste Betriebsadressen erhalten sollen. Diese Auswahl des gewünschten Busbereichs erfolgt anhand der Schritte 50-56, wobei im folgenden vorausgesetzt wird, dass es sich bei dem gewünschten Bereich um den in Fig. 1 mit dem Bezugszeichen 30 versehenden Bereich handeln soll.

Zu Beginn des erfindungsgemäßen Verfahrens wird der zentrale Befehlsgeber 1 in den sogenannten Adressiermodus versetzt, in dem er sämtliche Aktoren des Systems oder zumindest diejenigen Aktoren, die noch keine Betriebsadresse besitzen, auffordert, ihre Ursprungsadressen zu senden. Diese Aufforderung wird zunächst an alle Unterverteiler 100, 200, 300 des Bussystems übertragen, die dann - gegebenenfalls unter Verwendung eines anderen Übertragungsverfahrens - diese Aufforderung an die Aktoren ihrer jeweiligen Busbereiche 10, 20, 30 übermitteln. Die physikalischen Gegebenheiten in dem Bussystem haben zur Folge, dass eine der von den Aktoren übermittelten Ursprungsadressen als Erste den zentralen Befehlsgeber 1 erreicht. Diese empfangene Ursprungsadresse wird von dem Befehlsgeber 1 zwischengespeichert, was in Schritt 51 erfolgt.

In dem darauffolgenden Schritt 52 erfolgt wiederum durch den zentralen Befehlsgeber 1 eine Aufforderung an den Aktor mit der gespeicherten Ursprungsadresse, sich mit Hilfe eines äußerlich wahrnehmbaren, also beispielsweise akustischen oder optischen Signals zu identifizieren. Das direkte Ansprechen dieses Aktors ist mit Hilfe der zuvor empfangenen Ursprungsadresse möglich. Handelt es sich bei dem Aktor beispielsweise um eine Leuchte, so kann das Identifizierungssignal in einem Hellerwerden der Leuchte bestehen.

In dem darauf folgenden Schritt 53 muss der Benutzer des Systems entscheiden, ob sich der das Identifizierungssignal abgebende Aktor in dem gewünschten Busbereich befindet, den er adressieren möchte. Hierzu kann entweder der Standort des sich identifizierenden Aktors ermittelt oder lediglich überprüft werden, ob sich in dem gewünschten Bereich - hier in dem Bereich 30 - einer der darin angeordneten Aktoren 301-304 identifiziert.

Ist dies nicht der Fall, weil beispielsweise statt dessen der Aktor 201 in dem Bereich 20 zur Abgabe eines Identifizierungssignals aufgefordert wurde, so wird dieser Bereich 20 nachfolgend deaktiviert (Schritt 54) und zu dem Anfangsschritt 50 zurückgesprungen, d.h., es erfolgt eine weitere globale Aufforderung zur Übermittlung einer Ursprungsadresse. Dabei ist ein explizites Deaktivieren des Bereichs 20 gar nicht notwendig. Vielmehr ist es ausreichend, wenn sofort eine erneute Aufforderung zur Übermittlung einer Ursprungsadresse abgegeben wird. Der Unterverteiler 200 erkennt durch diese erneute Abfrage, dass der ihm zugeordnete Bereich 20 nicht der gewünschte Busbereich ist und nimmt selbstständig die Deaktivierung vor. Dabei wird der Unterverteiler 200 vorzugsweise insofern inaktiv geschaltet, als dass er nach einer Aufforderung zur Übermittlung von Ursprungsadressen die von den Aktoren 201-203 übermittelten Ursprungsadressen nur noch zeitverzögert an den zentralen Befehlsgeber 1 übermittelt. Durch diese Maßnahme wird sichergestellt, dass die Ursprungsadressen aus den anderen Adressbereichen 10 und 30 auf jeden Fall schneller bei dem zentralen Befehlsgeber 1 ankommen. Alternativ dazu kann der Unterverteiler 22 allerdings auch den Adressbereich 20 derart deaktivieren, dass gar keine Datenübertragung in diesen bzw. aus diesem Bereich 20 zugelassen wird. In beiden Fällen ist Voraussetzung, dass der Unterverteiler 200 selbst weiterhin aktiv auf dem Bus 11 mithört, um bei einer entsprechenden Aufforderung durch den zentralen Befehlsgeber 1 den Bereich 20 wieder zu aktivieren.

Durch das Deaktivieren des Bereichs 20 ist nach der erneuten Aufforderung durch den zentralen Befehlsgeber 1 in Schritt 50 nunmehr eine kleinere Anzahl von Aktoren im gesamten System in der Lage, ihre Ursprungsadressen an den zentralen Befehlsgeber 1 zu übermitteln. Wiederum wird der Aktor mit der zuerst empfangenen Ursprungsadresse zur Abgabe eines Identifizierungssignals aufgefordert. Sollte der sich daraufhin identifizierende Aktor wiederum nicht in den gewünschten Busbereich 30 befinden, so werden die zuvor erläuterten Schritte erneut wiederholt, d.h., der Bereich des sich nunmehr identifizierenden Aktors wird wiederum deaktiviert und es erfolgt eine erneute Aufforderung durch den zentralen Befehlsgeber 1.

Wird hingegen das Identifizierungssignal von einem in dem gewünschten Bereich 30 befindlichen Aktor, beispielsweise dem Aktor 302 abgegeben, so erfolgt eine Bestätigung durch den Benutzer, die zur Folge hat, dass alle anderen Adressbereiche in der oben beschriebenen Weise deaktiviert werden (Schritt 54). Diese Bestätigung kann beispielsweise dadurch erfolgen, dass an den sich nun identifizierenden und in dem gewünschten Bereich 30 befindlichen Aktor eine Betriebsadresse übermittelt wird (Schritt 55), was von den anderen Unterverteilern 100 und 200 dahingehend interpretiert wird, dass sie nicht dem gewünschten Busbereich 30 zugeordnet sind und ihre Bereiche 10 und 20 dementsprechend deaktiviert werden sollen.

Als Folge dieser Bestätigung und Deaktivierung der anderen Bereiche 10 und 20 können nachfolgend nur noch die Aktoren 301-304 des dem Unterverteiler 300 zugeordneten Busbereichs 30 in Kontakt mit dem zentralen Befehlsgeber 1 treten und demzufolge nur noch diese Aktoren 301-304 zur Abgabe eines Identifizierungssignals aufgefordert werden. In dem darauffolgenden Schritt 56 werden daher alle verbleibenden Aktoren 301, 303 und 304 des Bereichs 30 identifiziert und mit entsprechenden Betriebsadressen versehen. Das Identifizieren der Aktoren erfolgt wie oben beschrieben dadurch, dass diese zum Übermitteln ihrer Ursprungsadresse und nachfolgend zum Abgeben eines Identifizierungssignals aufgefordert werden. Da durch die zuvor beschriebene Auswahl des Busbereichs 30 sichergestellt wurde, dass sich nur noch die in diesem Bereich 30 angeordneten Aktoren 301-304 identifizieren, können die entsprechenden Aktoren schnell und einfach aufgefunden werden.

Nachdem sämtlichen Aktoren in dem ausgewählten Bereich 30 eine Betriebsadresse zugewiesen wurde, wird dieser Bereich 30 deaktiviert und in der oben beschriebenen Weise ein weiterer Busbereich ausgewählt, dessen Aktoren nachfolgend identifiziert werden und Betriebsadressen erhalten sollen. Dabei können bereits gespeicherte Ursprungsadressen von Aktoren, die sich nicht in dem Bereich 30 befinden, erneut aufgerufen werden, wodurch der Adressiervorgang beschleunigt wird. Die Anzahl der in dem zentralen Befehlsgeber 1 gespeicherten Ursprungsadressen kann beispielsweise auf fünf begrenzt werden, ebenso können aber auch sämtliche zuletzt empfangenen Ursprungsadressen gespeichert werden.

Wie zuvor erwähnt wurde, kann an Stelle des soeben beschriebenen Verfahrens, bei dem die einzelnen Aktoren ihre Ursprungsadresse an den zentralen Befehlsgeber übermitteln, auch das aus der WO 95/14972 A1 bekannte Verfahren zum Einsatz kommen, bei dem der Befehlsgeber 1 anhand von Suchbefehlen und entsprechenden Rückmeldungen der Aktoren Adressintervalle ermittelt, in denen jeweils eine Ursprungsadresse der Aktoren liegt. Bei dieser Variante könnte vorgesehen sein, dass zunächst der zentrale Befehlsgeber aus sämtlichen mit dem Bussystem verbundenen Aktoren den Aktor mit der niedrigsten oder höchsten Ursprungsadresse ermittelt und auffordert, sich zu identifizieren. Befindet sich dieser Aktor in dem gewünschten Busbereich, so werden entsprechend dem aus der WO 95/14972 A1 bekannten Verfahren sämtliche Aktoren dieses Bereichs identifiziert und mit geeigneten Betriebsadressen versehen. Befindet sich der Aktor mit der niedrigsten Ursprungsadresse hingegen nicht in dem gewünschten Busbereich, so wird der entsprechende Busbereich wiederum deaktiviert und unter den verbliebenen Aktoren erneut eine Suche nach dem Aktor mit dem niedrigsten bzw. höchsten Ursprungsadresse durchgeführt. Dies wird dann solange wiederholt, bis sich dieser Aktor in dem gewünschten Busbereich befindet. Nach der Auswahl eines Bereichs wird dann das Verfahren zum Identifizieren der Aktoren und Zuweisen von Betriebsadressen auf die Aktoren dieses Bereichs angewendet.

Bei beiden Varianten des erfindungsgemäßen Verfahrens wird somit ein langwieriges Aufsuchen des sich gerade identifizierenden Aktors vermieden und damit der Aufwand zur Inbetriebnahme des Steuersystems reduziert.

## Patentansprüche

1. Verfahren zur Betriebsadresszuordnung bei einer Vielzahl von Aktoren (101-104, 201-203, 301-304) die über ein Bussystem mit einem zentralen Befehlsgeber (1) verbunden sind,
**dadurch gekennzeichnet,**
**dass** die Aktoren (101-104, 201-203, 301-304) in mehreren Busbereichen (10, 20, 30) angeordnet sind,
wobei das Verfahren folgende Schritte aufweist,
- manuelles auswählen eines der Busbereiche,
- auffordern von Aktoren (101-104, 201-203, 301-304) zur Abgabe eines Identifizierungssignals, wobei nur die in jeweils dem ausgewählten Busbereich (10, 20, 30) befindlichen Aktoren (101-104, 201-203, 301-304) zur Abgabe eines Identifizierungssignals aufgefordert werden, und
- zuordnen einer Betriebsadresse zu den Aktoren (101-104, 201-203, 301-304), die ein Identifizierungssignals abgegeben haben.

2. Verfahren zur Betriebsadresszuordnung bei einer Vielzahl von Aktoren (101-104, 201-203, 301-304) die über ein Bussystem mit einem zentralen Befehlsgeber (1) verbunden sind,
**dadurch gekennzeichnet,**
**dass** die Aktoren (101-104, 201-203, 301-304) in mehreren Busbereichen (10, 20, 30) angeordnet sind,
wobei das Verfahren folgende Schritte aufweist
- auffordern von Aktoren (101-104, 201-203, 301-304) zur Abgabe eines Identifizierungssignals, wobei nur die in jeweils einem ausgewählten Busbereich (10, 20, 30) befindlichen Aktoren (101-104, 201-203, 301-304) zur Abgabe eines Identifizierungssignals aufgefordert werden
- zuordnen einer Betriebsadresse zu den Aktoren (101-104, 201-203, 301-304), die ein Identifizierungssignals abgegeben haben,
wobei die Auswahl eines Busbereichs (10, 20, 30) durch folgende Schritte erfolgt:
i. der zentrale Befehlsgeber (1) fordert einen beliebigen Aktor (101-104, 201-203, 301-304) zur Abgabe eines Identifizierungssignals auf,
ii. für den Fall, dass sich der das Identifizierungssignal abgebende Aktor (101-104, 201-203, 301-304) nicht in einem gewünschten Busbereich (10, 20, 30) befindet, ruft der zentrale Befehlsgeber (1) ohne Zuweisung einer Betriebsadresse einen weiteren Aktor (101-104, 201-203, 301-304) zur Abgabe eines Identifizierungssignals auf, wobei diese Aufforderung lediglich an diejenigen Aktoren (101-104, 201-203, 301-304) übermittelt wird, die sich in anderen Busbereichen (10, 20, 30) als der das vorherige Identifizierungssignal abgebende Aktor (101-104, 201-203, 301-304) befinden,
iii.für den Fall, dass sich der das Identifizierungssignal abgebende Aktor (101-104, 201-203, 301-304) in dem gewünschten Busbereich (10, 20, 30) befindet, wird diesem Aktor (101-104, 201-203, 301-304) eine Betriebsadresse zugewiesen, wobei die weiteren Aufforderungen zum Abgeben eines Identifizierungssignals lediglich an solche Aktoren übermittelt werden, die sich in dem selben Busbereich (10, 20, 30) wie der das vorherige Identifizierungssignal abgebende Aktor (101-104, 201-203, 301-304) befinden.

3. Verfahren nach einem der Ansprüche 1 bis 2,
**dadurch gekennzeichnet,**
**dass** vor einer Aufforderung zum Abgeben des Identifizierungssignals der zentrale Befehlsgeber (1) die mit dem Bussystem verbundenen Aktoren (101-104, 201-203, 301-304) zur Übermittlung einer Ursprungsadresse aufruft und dann denjenigen Aktor Aktoren (101-104, 201-203, 301-304) zur Abgabe des Identifizierungssignals auffordert, dessen Ursprungsadresse zuerst von dem zentralen Befehlsgeber (1) empfangen wurde.

4. Verfahren nach Anspruch 3,
**dadurch gekennzeichnet,**
**dass** nach der Auswahl eines Busbereiches lediglich die in einem ausgewählten Busbereich (10, 20, 30) angeordneten Aktoren (101-104, 201-203, 301-304) zur Abgabe ihrer Ursprungsadresse aufgefordert werden
oder die Übermittlung der Ursprungsadressen der in anderen Busbereichen (10, 20, 30) angeordneten Aktoren (101-104, 201-203, 301-304) unterdrückt oder zeitlich verzögert wird.

5. Verfahren nach Anspruch 3 oder 4,
**dadurch gekennzeichnet,**
**dass** lediglich solche Aktoren (101-104, 201-203, 301-304) ihre Ursprungsadresse übermitteln, denen noch keine Betriebsadresse zugewiesen wurde.

6. Verfahren nach einem der Ansprüche 1 bis 2,
**dadurch gekennzeichnet,**
**dass** der zentrale Befehlsgeber (1) denjenigen Aktor (101-104, 201-203, 301-304) mit der höchsten oder niedrigsten Ursprungsadresse ermittelt und zur Abgabe des Identifizierungssignals auffordert.

7. Verfahren nach Anspruch 6,
**dadurch gekennzeichnet,**
**dass** bei der Ermittlung des Aktors (101-104, 201-203, 301-304) mit der höchsten oder niedrigsten Ursprungsadresse lediglich solche Aktoren (101-104, 201-203, 301-304) berücksichtigt werden, denen noch keine Betriebsadresse zugewiesen wurde.

8. Verfahren nach einem der vorherigen Ansprüche,
**dadurch gekennzeichnet,**
**dass** es sich bei den Ursprungsadressen zumindest teilweise um Produktionsnummern handelt, die den Aktoren (101-104, 201-203, 301-304) bei deren Herstellung zugewiesen werden.

9. Verfahren nach einem der Ansprüche 1 bis 7,
**dadurch gekennzeichnet,**
**dass** die Aktoren (101-104, 201-203, 301-304) nach dem Aufruf durch den zentralen Befehlsgeber (1) zumindest einen Teil ihrer Ursprungsadresse per Zufall selbst generieren.

10. Verfahren nach einem der vorherigen Ansprüche,
**dadurch gekennzeichnet,**
**dass** ein Teil der Ursprungsadresse eine gerätespezifische Kennzeichnungsadresse ist, welche den Typ des jeweiligen Aktors (101-104, 201-203, 301-304) kennzeichnet.

11. Steuersystem zur Durchführung des Verfahrens zur Betriebsadresszuordnung nach einem der vorherigen Ansprüche, aufweisend
einen zentralen Befehlsgeber (1),
mehrere in verschiedenen Busbereichen-(10, 20, 30) angeordnete Aktoren (101-104, 201-203, 301-304), die dazu ausgebildet sind Identifizierungssignale abzugeben, sowie ein Bussystem (11, 110, 210, 310), das den zentralen Befehlsgeber (1) mit den Aktoren (101-104, 201-203, 301-304) verbindet,
**gekennzeichnet durch**
mehrere Unterverteiler (100, 200, 300) die jeweils einen Busbereich (10, 20, 30) des Bussystems (11, 110, 210, 310) mit dem zentralen Befehlsgeber (1) verbinden und dazu ausgebildet sind, während der Durchführung des Verfahrens zur Betriebsadresszuordnung die Aufforderung an die Aktoren (101-104, 201-203, 301-304) zum Abgeben des Identifizierungssignals, die sich nicht in einem ausgewählten Busbereich (10, 20, 30) befinden, zu unterdrücken.

12. Steuersystem nach Anspruch 11,
**dadurch gekennzeichnet,**
**dass** die Busleitungen zwischen dem zentralen Befehlsgeber (1) und den Unterverteilern (100, 200, 300) bzw. zwischen den Unterverteilern (100, 200, 300) und den Aktoren (101-104, 201-203, 301-304) jeweils unterschiedlich ausgebildet sind, wobei die Unterverteiler (100, 200, 300) als Umsetzer für die Datenübertragung von einem Bussystem auf das andere Bussystem wirken.

13. Steuersystem nach Anspruch 11 oder 12,
**dadurch gekennzeichnet,**
**dass** es sich bei den Aktoren (101-104, 201-203, 301-304) um Leuchtenmodule eines Beleuchtungssystems handelt.

## Claims

1. A method for the operating address assignment in the case of a plurality of actuators (101-104, 201-203, 301-304) which are connected via a bus system with a central command generator (1),
**characterized in**
**that** the actuators (101-104, 201-203, 301-304) are arranged in a plurality of bus regions (10, 20, 30),
wherein the method has the following steps,
- manually selecting one of the bus regions,
- prompting actuators (101-104, 201-203, 301-304) to provide an identification signal, wherein only the actuators (101-104, 201-203, 301-304) located in the bus region selected in each case are prompted to provide an identification signal, and
- assigning an operating address to the actuators (101-104, 201-203, 301-304), which have provided an identification signal.

2. A method for the operating address assignment in the case of a plurality of actuators (101-104, 201-203, 301-304) which are connected via a bus system with a central command generator (1),
**characterized in**
**that** the actuators (101-104, 201-203, 301-304) are arranged in a plurality of bus regions (10, 20, 30),
wherein the method has the following steps,
- prompting actuators (101-104, 201-203, 301-304) to provide an identification signal, wherein only the actuators (101-104, 201-203, 301-304) located in the bus region (10, 20, 30) selected in each case are prompted to provide an identification signal, and
- assigning an operating address to the actuators (101-104, 201-203, 301-304), which have provided an identification signal,
wherein the selection of a bus region (10, 20, 30) is made by the following steps:
i. the central command generator (1) prompts any actuator (101-104, 201-203, 301-304) to provide an identification signal,
ii. in the event that the actuator (101-104, 201-203, 301-304) providing the identification signal is not located in a desired bus region (10, 20, 30), without assigning an operating address the central command generator (1) calls on a further actuator (101-104, 201-203, 301-304) to provide an identification signal, wherein this prompting is only transmitted to those actuators (101-104, 201-203, 301-304), which are located in other bus regions (10, 20, 30) than the actuator (101-104, 201-203, 301-304) providing the previous identification signal,
iii. in the event that the actuator (101-104, 201-203, 301-304) providing the identification signal is located in the desired bus region (10, 20, 30), an operating address is assigned to said actuator (101-104 201-203, 301-304), wherein the further promptings to provide an identification signal are only transmitted to such actuators, which are located in the same bus region (10, 20, 30) as the actuator (101-104, 201-203, 301-304) providing the previous identification signal.

3. A method according to any one of Claims 1 to 2,
**characterized in**
**that** before a prompting to provide the identification signal the central command generator (1) calls on the actuators (101-104, 201-203, 301-304) connected with the bus system to transmit an original address and then prompts actuators (101-104, 201-203, 301-304) to provide the identification signal to that actuator, the original address of which was first received from the central command generator (1).

4. A method according to Claim 3,
**characterized in**
**that** after the selection of a bus region only the actuators (101-104, 201-203, 301-304) arranged in a selected bus region (10, 20, 30) are prompted to provide their original address
or the transmission of the original addresses of the actuators (101-104, 201-203, 301-304) arranged in other bus regions (10, 20, 30) is suppressed or time-delayed.

5. A method according to Claim 3 or 4,
**characterized in**
**that** only such actuators (101-104, 201-203, 301-304) transmit their original address, to which no operating address has yet been assigned.

6. A method according to any one of Claims 1 to 2,
**characterized in**
**that** the central command generator (1) determines that actuator (101-104, 201-203, 301-304) with the highest or lowest original address and prompts it to provide the identification signal.

7. A method according to Claim 6,
**characterized in**
**that** in determining the actuator (101-104, 201-203, 301-304) with the highest or lowest original address only such actuators (101-104, 201-203, 301-304) are considered, to which no operating address has yet been assigned.

8. A method according to any one of the preceding claims,
**characterized in**
**that** the original addresses are at least partially production numbers, which are assigned to the actuators (101-104, 201-203, 301-304) during their production.

9. A method according to any one of Claims 1 to 7,
**characterized in**
**that** the actuators (101-104, 201-203, 301-304) themselves randomly generate at least one part of their original address after the call by the central command generator (1).

10. A method according to any one of the preceding claims,
**characterized in**
**that** a part of the original address is a device-specific characterizing address, which characterizes the type of the respective actuator (101 -104, 201-203, 301-304).

11. A control system for implementing the method for the operating address assignment according to any one of the preceding claims, having
a central command generator (1),
a plurality of actuators (101-104, 201-203, 301-304) arranged in different bus regions (10, 20, 30), which are designed to provide identification signals, as well as a bus system (11, 110, 210, 310), which connects the central command generator (1) with the actuators (101-104, 201-203, 301-304),
**characterized in**
**that** a plurality of sub-distributors (100, 200, 300) connect the in each case one bus region (10, 20, 30) of the bus system (11, 110, 210, 310) with the central command generator (1) and are designed during the implementation of the method for the operating address assignment to suppress the prompting of the actuators (101-104, 201-203, 301-304) to provide the identification signal, which are not located in a selected bus region (10, 20, 30).

12. A control system according to Claim 11
**characterized in**
**that** the bus lines between the central command generator (1) and the sub-distributors (100, 200, 300) or between the sub-distributors (100, 200, 300) and the actuators (101-104, 201-203, 301-304) are in each case designed differently, wherein the sub-distributors (100, 200, 300) act as converters for the data transmission from one bus system to the other bus system

13. A control system according to Claim 11 or 12,
**characterized in**
**that** the actuators (101-104, 201-203, 301-304) are luminaire modules of an illumination system.

## Revendications

1. Procédé d'attribution d'adresses de fonctionnement pour une pluralité d'actionneurs (101-104, 201-203, 301-304) qui sont reliés par l'intermédiaire d'un système de bus avec un générateur d'instructions central (1),
**caractérisé en ce que**
les actionneurs (101-104, 201-203, 301-304) sont disposés dans plusieurs zones de bus (10, 20, 30),
le procédé comprenant les étapes suivantes :
- sélection manuelle d'une des zones du bus,
- sollicitation d'actionneurs (101-104, 201-203, 301-304) pour l'émission d'un signal d'identification, seuls les actionneurs (101-104, 201-203, 301-304) se trouvant dans la zone de bus (10, 20, 30) sélectionnée étant sollicités pour l'émission d'un signal d'identification et
- attribution d'une adresse de fonctionnement aux actionneurs (101 -104, 201-203, 301-304) qui émettent un signal d'identification.

2. Procédé d'attribution d'adresses de fonctionnement pour une pluralité d'actionneurs (101-104, 201-203, 301-304) qui sont reliés par l'intermédiaire d'un système de bus avec un générateur d'instructions central (1),
**caractérisé en ce que**
les actionneurs (101-104, 201-203, 301-304) sont disposés dans plusieurs zones de bus (10, 20, 30),
le procédé comprenant les étapes suivantes :
- sollicitation d'actionneurs (101-104, 201-203, 301-304) pour l'émission d'un signal d'identification, seuls les actionneurs (101-104, 201-203, 301-304) se trouvant dans la zone de bus (10, 20, 30) sélectionnée étant sollicités pour l'émission d'un signal d'identification,
- attribution d'une adresse de fonctionnement aux actionneurs (101-104, 201-203, 301-304) qui émettent un signal d'identification,
la sélection d'une zone de bus (10, 20, 30) ayant lieu à l'aide des étapes suivantes :
i. le générateur d'instructions central (1) sollicite un actionneur (101 -104, 201-203, 301-304) quelconque pour l'émission d'un signal d'identification,
ii. dans le cas où l'actionneur (101-104, 201-203, 301-304) émettant le signal d'identification ne se trouve pas dans une zone de bus (10, 20, 30) souhaitée, le générateur d'instructions central (1) appelle, sans attribution d'une adresse de fonctionnement, un autre actionneur (101-104, 201-203, 301-304) pour l'émission d'un signal d'identification, cette sollicitation étant transmise uniquement aux actionneurs (101 -104, 201-203, 301-304) qui se trouvent dans d'autres zones du bus (10, 20, 30) que l'actionneur (101 -104, 201-203, 301-304) émettant le signal d'identification précédent,
iii. dans le cas où l'actionneur (101-104, 201-203, 301-304) émettant le signal d'identification se trouve dans une zone de bus (10, 20, 30) souhaitée, une adresse de fonctionnement est attribuée à cet actionneur (101-104, 201-203, 301-304), les autres sollicitations pour l'émission d'un signal d'identification étant transmises uniquement aux actionneurs qui se trouvent dans la même zone de bus (10, 20, 30) que l'actionneur (101 -104, 201-203, 301-304) émettant le signal d'identification précédent.

3. Procédé selon l'une des revendications 1 à 2,
**caractérisé en ce que**
avant une sollicitation pour l'émission du signal d'identification, le générateur d'instructions central (1) appelle les actionneurs (101-104, 201-203, 301-304) reliés avec le système de bus pour la transmission d'une adresse initiale puis sollicite, pour l'émission du signal d'identification, l'actionneur (101-104, 201-203, 301-304) dont l'adresse initiale a d'abord été reçue par le générateur d'instructions central (1).

4. Procédé selon la revendication 3,
**caractérisé en ce que**
après la sélection d'une zone de bus, seuls les actionneurs (101 -104, 201-203, 301-304) disposés dans une zone de bus (10, 20, 30) sélectionnée sont sollicités pour l'émission de leur adresse initiale
ou bien la transmission des adresses initiales des actionneurs (101-104, 201-203, 301-304) disposés dans d'autres zone du bus (10, 20, 30) est inhibée ou retardée.

5. Procédé selon la revendication 3 ou 4,
**caractérisé en ce que**
seuls les actionneurs (101-104, 201-203, 301-304) auxquels aucune adresse de fonctionnement n'a encore été attribuée transmettent leur adresse initiale.

6. Procédé selon l'une des revendications 1 à 2,
**caractérisé en ce que**
le générateur d'instructions central (1) déterminer l'actionneur (101-104, 201-203, 301-304) avec l'adresse initiale la plus élevée ou la plus basse et le sollicite pour l'émission du signal d'identification.

7. Procédé selon la revendication 6,
**caractérisé en ce que**
lors de la détermination de l'actionneur (101-104, 201-203, 301-304) avec l'adresse initiale la plus élevée ou la plus basse, seuls les actionneurs (101-104, 201-203, 301-304) auxquels aucune adresse de fonctionnement n'a encore été attribuée sont pris en compte.

8. Procédé selon l'une des revendications précédentes,
**caractérisé en ce que**
les adresses initiales sont au moins partiellement des numéros de production qui sont attribués aux actionneurs (101-104, 201-203, 301-304) lors de leur fabrication.

9. Procédé selon l'une des revendications 1 à 7,
**caractérisé en ce que**
les actionneurs (101-104, 201-203, 301-304) génèrent eux-mêmes de manière aléatoire au moins une partie de leur adresse initiale après l'appel par le générateur d'instructions central (1).

10. Procédé selon l'une des revendications précédentes,
**caractérisé en ce que**
une partie de l'adresse initiale est une adresse d'identification spécifique à un appareil, qui identifie le type d'actionneur (101-104, 201-203, 301-304).

11. Système de commande pour l'exécution du procédé d'attribution d'adresses de fonctionnement selon l'une des revendications précédentes, comprenant
un générateur d'instructions central (1),
plusieurs actionneurs (101-104, 201-203, 301-304) disposés dans différentes zones de bus (10, 20, 30), qui sont conçus pour émettre des signaux d'identification, ainsi qu'un système de bus (11, 110, 210, 310) qui relie le générateur d'instructions central (1) avec les actionneurs (101-104, 201-203, 301-304),
**caractérisé par**
plusieurs sous-répartiteurs (100, 200, 300) qui relient chacun une zone de bus (10, 20, 30) du système de bus (11, 110, 210, 310) avec le générateur d'instructions central (1) et qui sont conçus pour inhiber, pendant l'exécution du procédé d'attribution d'adresses de fonctionnement, la sollicitation des actionneurs (101 -104, 201-203, 301-304) pour l'émission du signal d'identification qui ne se trouvent pas dans une zone de bus (10, 20, 30) sélectionnée.

12. Système de commande selon la revendication 11,
**caractérisé en ce que**
les lignes de bus sont conçues différemment entre le générateur d'instructions central (1) et les sous-répartiteurs (100, 200, 300) ou entre les sous-répartiteurs (100, 200, 300) et les actionneurs (101-104, 201-203, 301-304), les sous-répartiteurs (100, 200, 300) servant de convertisseurs pour la transmission de données d'un système de bus à l'autre.

13. Système de commande selon la revendication 11 ou 12,
**caractérisé en ce que**
les actionneurs (101-104, 201-203, 301-304) sont des modules de luminaires d'un système d'éclairage.
